# EUROPEAN PATENT SPECIFICATION

(11) **EP 3 002 975 B1**
(45) Date of publication and mention of the grant of the patent: **16.08.2017**
(21) Application number: 14820450.6
(22) Date of filing: 21.04.2014
(51) Int. Cl.: H04W 52/02, H04L 29/06, H04W 8/00, H04W 88/04, H04L 29/08, H04W 4/18

(54) **HOME NETWORK DEVICE AND METHOD OF PROXY SERVICE DISCOVERING**
HEIMNETZWERKVORRICHTUNG UND VERFAHREN ZUR PROXY-DIENST-ENTDECKUNG
DISPOSITIF DE RÉSEAU RÉSIDENTIEL ET PROCÉDÉ DE DÉCOUVERTE DE SERVICE DE MANDATAIRE

(30) Priority: 01.07.2013 CN 201310272226
(43) Date of publication of application: 06.04.2016
(73) Proprietor: ZTE Corporation, Shenzhen, Guangdong 518057 (CN)
(72) Inventor: WANG, Lin, Shenzhen Guangdong 518057 (CN); ZHANG, Boshan, Shenzhen Guangdong 518057 (CN)
(74) Representative: Awapatent AB
(86) International application number: PCT/CN2014/075767
(87) International publication number: WO 2015/000326

(56) References cited:
- CN-A- 1 788 247
- CN-A- 1 823 495
- CN-A- 1 833 214
- CN-A- 101 572 938
- CN-A- 102 571 507
- US-A1- 2006 265 473
- US-A1- 2007 250 590
- US-A1- 2009 240 794
- US-A1- 2010 322 213

## Description

### Technical Field

The present invention relates to the field of communications, and more particularly, to a home network device and a proxy service discovery method.

### Background of the Related Art

A home network is composed of home network devices using a variety of wired technologies (such as Ethernet, power line technology, etc.) and a variety of wireless technologies (such as WiFi, Bluetooth, Zigbee, etc.), and these devices may be mobile or fixed. In order to make the devices more quickly and efficiently discover their desired services and perform further service discovery related operations with a relatively low power consumption, the pre-associated service discovery mechanism may be provided to make the devices perform the service discovery process and related information exchange before establishing a link connection, and then establish the link connection after confirming a target device.

In the pre-associated service discovery mechanism being developed by the relevant WiFi Alliance, in order to ensure that the devices can discover each other, all devices belonging to the same service discovery set are required to be clock synchronized to remain in the working state in a specified periodic time period (a typical value of time interval is 100ms) in order to transmit and correctly receive the service discovery beacon frame and synchronization beacon frame, and remain in the working state within an agreed periodic time window to perform the exchanging of service discovery messages. The typical process of an pre-associated service discovery mechanism is that, all devices belonging to one service discovery set transmit or receive service discovery beacon frames and synchronization beacon frames within the agreed periodic time period (such as the time interval of 100ms) to complete the setting of parameters related to the synchronization and service discovery. Then, in the agreed periodic time window, the device A advertises (or broadcasts) services that it provides to the device B, and after receiving the services, the device B selects the one it desires and sends a service registration request to the device A, the device A returns a response message to the device B, and then performs the exchange of subsequent service discovery information.

The document US2009/240794A1 discloses a method of server energy conservation in networks, comprising integrating a layer-2 service discovery proxy with an access point (AP) in the network, wherein the AP advertises the services on behalf of servers in the network to enable the servers to go to a low power state and conserve energy.

The document US2006/265473A1 discloses a printer as a peripheral notifies a proxy response server connectable to a LAN during transition to a sleep mode from a normal data processing wait state of sleep transition request.

The document US2010/322213A1 discloses a service discovery scheme in a wireless network, which involves an Access Point (AP) proxy service to represent service providers.

The document US2007/250590A1 discloses a method describing a dynamic construction of a virtual proxy using a set of virtual proxy hosts. The virtual proxy hosts may maintain a shared data store that contains a record of discovered services on a network.

### Summary of the Invention

To solve the technical problem, the present invention provides a home network device according to claim 8, a home network device with proxy function according to claim 12 and a proxy service discovery method according to claim 1 to reduce the power consumption of devices at the same time of ensuring that service discovery operations of various devices are normal. Further improvements and embodiments are provided in the dependent claims.

Also provided is a method for proxy service discovery of a home network, which comprises:
a proxy demand device acquiring related information of proxy service discovery function of proxy devices;
the proxy demand device negotiating specific parameters of proxy service discovery with the proxy devices;
the proxy device performing service discovery operations of the proxy demand device on behalf of the proxy demand device, and maintaining an information exchange with the proxy demand device.

Preferably, in the abovementioned method, the service discovery operations performed by the proxy device on behalf of the proxy demand device comprise at least one or more of the following operations:
advertising a MAC address of the proxy demand device;
advertising the service type identity that the proxy demand device requests the proxy to advertise;
advertising conditions or content of services that can be provided in the service type that the proxy demand device requests the proxy to advertise;
if the proxy device receives response messages for the advertised service type from other home network devices, the proxy device notifying the proxy demand device of the information;
if the proxy device receives the service type identity in which the proxy demand device is interested, or the proxy device receives conditions or contents of services that can be provided in the service type in which the proxy demand device is interested, the proxy device notifying the proxy demand device of the information.

Preferably, in the abovementioned method, the proxy device maintains the information exchange with the proxy demand device in the following manner:
the proxy demand device performing a periodic listening operation;
if the proxy device has information to be notified to the proxy demand device, the proxy device sending the information to the proxy demand device within the periodic listening time period;
if the proxy demand device does not need a proxy, the proxy demand device sending an exiting proxy mode message to the proxy device, and the proxy device stops all proxy operations for the proxy demand device after receiving the message;
if the proxy device cannot continue a proxy operation, the proxy device sending an exiting proxy mode message to the proxy demand device in the periodic listening time period, and the proxy demand device exiting the proxy mode after receiving the message.

Preferably, in the abovementioned method, the proxy device further maintains the information exchange with the proxy demand device in the following manners:
the proxy demand device sending at least one message to the proxy device within an agreed time;
if the proxy device does not receive any message from the proxy demand device within the agreed time, the proxy device sending an exiting proxy mode message to the proxy device, and stopping all proxy operations for the proxy demand device.

Preferably, in the abovementioned method, the process of the proxy demand device acquiring service discovery related information of the proxy device is as follows:
the proxy demand device receiving service discovery messages carrying a device proxy service discovery function from other home network devices, wherein the service discovery message is one of a service discovery beacon frame, a synchronization beacon frame and other service discovery messages; or
the proxy demand device sending a proxy demand message to other home network devices, receiving proxy demand response messages returned by other home network devices, and acquiring the related information of device proxy service discovery function from the proxy demand response messages.

Preferably, in the abovementioned method, the process of the proxy demand device negotiating the specific parameters of proxy service discovery with the proxy device is as follows:
the proxy demand device sending a proxy parameter negotiation request message to the proxy device, wherein the proxy parameter negotiation request message carries specific parameters of the proxy service discovery expected by the proxy demand device;
the proxy device sending a proxy parameter negotiation response message to the proxy demand device, wherein the proxy parameter negotiation response message carries at least any of the following information:
   an identity of totally accepting the expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

Preferably, in the abovementioned method, the specific parameters of the proxy service discovery expected by the proxy demand device comprise one or more of the following:
a listening time interval of the proxy demand device, a service type identity that needs to be advertised by the proxy, conditions or contents of services that can be provided in the service type that needs to be advertised by the proxy, interested service type identities provided by other home network devices, interested conditions or contents of services that can be provided in the service types provided by other home network devices.

Preferably, the abovementioned method further comprises:
when two or more proxy devices include the identity of totally accepting the expected specific parameters of the proxy service discovery in the returned proxy parameter negotiation response message, the proxy demand device selecting one of the devices as the proxy device.
Also provided is a home network device, which comprises:
   a first unit, configured to: acquire related information of proxy service discovery function of proxy devices with proxy function in a home network;
   a second unit, configured to: negotiate specific parameters of the proxy service discovery with the proxy devices;
   a third unit, configured to: determine service discovery operations of a present proxy demand device performed by the proxy device on behalf of the present proxy demand device, and maintain an information exchange with the proxy devices.

Preferably, in the abovementioned device, the first unit is configured to: the process of acquiring the service discovery related information of the proxy devices is as follows:
the first unit receiving service discovery messages carrying a device proxy service discovery function from other home network devices, wherein the service discovery message is one of a service discovery beacon frame, a synchronization beacon frame and other service discovery messages; or
the first unit sending a proxy demand message to other home network devices, receiving proxy demand response messages returned by other home network devices, and acquiring related information of the device proxy service discovery function from the proxy demand response messages.

Preferably, in the abovementioned device, the second unit is configured to: the process of negotiating the specific parameters of the proxy service discovery with the proxy devices is as follows;
the second unit sending a proxy parameter negotiation request message to the proxy devices, wherein the proxy parameter negotiation request message carries specific parameters of the proxy service discovery expected by the present proxy demand device; and receiving a proxy parameter negotiation response message fed back by the proxy device;
wherein, the specific parameters of the proxy service discovery expected by the present proxy demand device comprises one or more of the following:
a listening time interval of the proxy demand device, a service type identity that needs to be advertised by the proxy, conditions or contents of services that can be provided in the service type that needs to be advertised by the proxy, interested service type identities provided by other home network devices, interested conditions or contents of services that can be provided in the service types provided by other home network devices;
the proxy parameter negotiation response message at least comprises any one or more of the following information:
   an identity of totally accepting the expected specific parameters of the proxy service discovery, an identity of totally rejecting the expected specific parameters of the proxy service discovery, an identity of partially accepting expected the specific parameters of the proxy service discovery and a list of accepted specific parameters of the proxy service discovery.

Preferably, in the abovementioned device, the third unit is configured to: when two or more proxy devices include the identity of totally accepting the expected specific parameters of the proxy service discovery in the returned proxy parameter negotiation response messages, select one of the devices as the proxy device.

Also provided is a home network device with proxy function, which comprises:
a first unit, configured to: send related information of proxy service discovery function of the present device to the proxy demand device having proxy demands;
a second unit, configured to: negotiate specific parameters of the proxy service discovery with the proxy demand device;
a third unit, configured to: after receiving a notification of deciding a proxy, perform service discovery operations of the proxy demand device on behalf of the proxy demand device, and maintain an information exchange with the proxy device.

Preferably, in the abovementioned device, the third unit is configured to: performing the service discovery operations of the proxy demand device on behalf of the proxy demand device comprises at least one or more of the following operations:
advertising the MAC address of the proxy demand device;
advertising the service type identity that the proxy demand device requests the proxy to advertise;
advertising conditions or contents of services that can be provided in the service type that the proxy demand device requests the proxy to advertise;
if the proxy device receives response messages for the advertised service type from other home network devices, the proxy device notifying the proxy demand device of the information;
if the proxy device receives the service type identity in which the proxy demand device is interested, or the proxy device receives conditions or contents of services that can be provided in the service type in which the proxy demand device is interested, the proxy device notifying the proxy demand device of the information.

The third device is configured to, maintain the information exchange with the proxy demand device in the following manner:
the proxy demand device performing a periodic listening operation;
if the proxy device has information to be notified to the proxy demand device, the proxy device sending the information to the proxy demand device in the periodic listening time period;
if the proxy demand device does not need the proxy, the proxy demand device sending an exiting proxy mode message to the proxy device, and the proxy device stopping all proxy operations for the proxy demand device after receiving the message;
if the proxy device cannot continue the proxy operations, the proxy device sending an exiting proxy mode message to the proxy demand device within the periodic listening time period, and the proxy demand device exiting the proxy mode after receiving the message.

Preferably, in the abovementioned device, the third unit is configured to: further maintain the information exchange with the proxy demand device in the following manner:
the proxy demand device sending at least one message to the proxy device within an agreed time;
if the proxy device does not receive any message from the proxy demand device within the agreed time, the proxy device sending an exiting proxy mode message to the proxy device, and stopping all the proxy operations for the proxy demand device.

Preferably, in the abovementioned device, the first unit is configured to: the process of sending the related information of proxy service discovery function of the present device to the proxy demand device having proxy demands is as follows:
the first unit actively sending a service discovery message carrying the device proxy service discovery function to the proxy demand device, wherein the service discovery message is one of a service discovery beacon frame, a synchronization beacon frame and other service discovery messages; or
the first unit receiving a proxy demand message sent from the proxy demand device, and feeding back a proxy demand response message, wherein the proxy demand response message comprises the related information of device proxy service discovery function.

Preferably, in the abovementioned device, the second device is configured to: the process of negotiating the specific parameters of the proxy service discovery with the proxy demand device is as follows;
the second unit receiving a proxy parameter negotiation request message sent by the proxy demand device, wherein the proxy parameter negotiation request message carries specific parameters of the proxy service discovery expected by the proxy demand device, and feeding back a proxy parameter negotiation response message to the proxy device;
wherein, the specific parameters of the proxy service discovery expected by the proxy demand device comprises one or more of the following:
a listening time interval of the proxy demand device, a service type identity that needs to be advertised by the proxy, conditions or contents of services that can be provided in the service type that needs to be advertised by the proxy, interested service type identities provided by other home network devices, interested conditions or contents of services that can be provided in the service types provided by other home network devices.

The proxy parameter negotiation response message at least comprises any one or more of the following information:
an identity of totally accepting the expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

The technical solution of the present application makes certain home network devices or home network devices negotiate with a certain proxy device under certain special conditions, and within a certain time period or in the case that special conditions are triggered, a device having the proxy service discovery function can perform the service discovery operations on behalf of these devices. Thereby the sleep time of these devices is prolonged at the same time of ensuring that the service discovery operations of these devices are normal, which greatly reduce the power consumption of these devices and improve the working efficiency and overall performance of the home network service discovery.

### Brief Description of the Drawings

FIG. 1 is a schematic diagram of a proxy service discovery method of a home network;
FIG. 2 is a flow chart of a proxy service discovery of home network in accordance with an embodiment;
FIG. 3 is a structural diagram of a home network device in accordance with a second embodiment;
FIG. 4 is a structural diagram of the home network device in accordance with a third embodiment.

### Preferred Embodiments of the Invention

Hereinafter in conjunction with the accompanying figures, embodiments of the present invention will be described in detail. It should be noted that, in the case of no conflict, embodiments and features in the embodiments of the present application may be arbitrarily combined with each other.

### The first embodiment

In the existing pre-associated service discovery mechanism, in order to ensure that the devices can discover each other, all the devices belonging to a same service discovery set need to be clock synchronized to maintain the working state in a specified periodic time period (the typical value of the time interval is 100ms) to transmit and correctly receive the service discovery beacon frame and synchronization beacon frame, and remain the working state within an agreed periodic time window to perform the exchange of service discovery messages. However, the inventors of the present application have found that, in the actual home network, battery-powered devices (such as cell phones, sensors, etc.) have very stringent requirements on power consumption, especially some home network sensor devices, they require that the battery life is in the magnitude of a few years. For such devices, using the typical time interval that is in the magnitude of 100ms is clearly inappropriate and will greatly increase the power consumption. Meanwhile, for some service discovery application scenarios, there are few service types needed by the device, and also the required service time and frequency are little, such applications are not suitable for the time interval whose typical value is in the magnitude of 100ms.

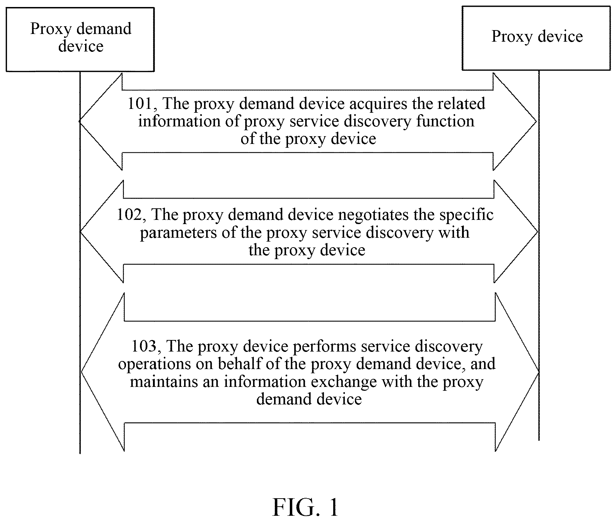

Based on the abovementioned ideas, the present embodiment provides a proxy service discovery method for the home network to reduce power consumption of the service discovery and aim for some special service discovery application scenarios. Specifically, the method is shown in FIG. 1, comprising the operations of the following steps 101 to 103:
in step 101, the proxy demand device acquires the related information of proxy service discovery function of the proxy device;
the step can be but is not limited to acquiring the related information of proxy service discovery function of the proxy device in the following manner:
   the proxy demand device receiving service discovery messages carrying the device proxy service discovery function from other home network devices, wherein the service discovery message is one of a service discovery beacon frame, a synchronization beacon frame and other service discovery messages.

Or, the proxy demand device sending a proxy demand message to other home network devices, receiving proxy demand response messages returned by other home network devices, and acquires the related information of device proxy service discovery function from the proxy demand response messages.

In step 102, the proxy demand device negotiates the specific parameters of the proxy service discovery with the proxy device;

In the present embodiment, the process of the proxy demand device negotiating the specific parameters of the proxy service discovery with the proxy device can refer to the following operations;
the proxy demand device sending a proxy parameter negotiation request message to the proxy device, wherein the proxy parameter negotiation request message carries specific parameters of the proxy service discovery expected by the proxy demand device;
the proxy device sending a proxy parameter negotiation response message to the proxy demand device.

Wherein, the specific parameters of the proxy service discovery expected by the proxy demand device comprises one or more of the following:
a listening time interval of the proxy demand device, a service type identity that needs to be advertised by the proxy, conditions or contents of services that can be provided in the service type that needs to be advertised by the proxy, interested service type identities provided by other home network devices, interested conditions or contents of services that can be provided in the service types provided by other home network devices.

The proxy parameter negotiation response message at least carries any of the following information:
an identity of totally accepting the expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

In step 103, the proxy demand device performs service discovery operations on behalf of the proxy demand device, and maintains the information exchange with the proxy demand device.
in the present step, the service discovery operations performed by the proxy device on behalf of the proxy demand device comprise at least one or more of the following operations:
advertising the MAC address of the proxy demand device;
advertising the service type identity that the proxy demand device requests the proxy to advertise;
advertising conditions or contents of services that can be provided in the service type that the proxy demand device requests the proxy to advertise;
if the proxy device receives response messages for the advertised service type from other home network devices, the proxy device notifying the proxy demand device of the information;
if the proxy device receives the service type identity in which the proxy demand device is interested, or the proxy device receives conditions or contents of services that can be provided in the service type in which the proxy demand device is interested, the proxy device notifying the proxy demand device of the information.

The proxy device maintains the information exchange with the proxy demand device in the following manner:
the proxy demand device performing the periodic listening operation;
if the proxy device has information to be notified to the proxy demand device, the proxy device sending the information to the proxy demand device in the periodic listening time period;
if the proxy demand device does not need the proxy, the proxy demand device sending an exiting proxy mode message to the proxy device, and the proxy device stopping all the proxy operations for the proxy demand device after receiving the message;
if the proxy device cannot continue the proxy operation, the proxy device sending an exiting proxy mode message to the proxy demand device in the periodic listening time period, and the proxy demand device exiting the proxy mode after receiving the message.

In addition, on the basis of the abovementioned exchanging method, the proxy device maintains the information exchange with the proxy demand device further in the following manner:
the proxy demand device sending at least one message to the proxy device within the agreed time;
if the proxy device does not receive any message from the proxy demand device within the agreed time, the proxy device sending an exiting proxy mode message to the proxy device, and stopping all the proxy operations for the proxy demand device.

It should be noted that, when two or more proxy devices include the identity of totally accepting the expected specific parameters of the proxy service discovery in the returned proxy parameter negotiation response messages, the proxy demand device selects one of the devices as the proxy device.

Hereinafter, in conjunction with the accompanying drawings and specific embodiments, the abovementioned method will be described in further detail.

Suppose a home network comprises four devices, device 1 and device 2 have the proxy function, that is, they are proxy devices, and device 3 is an ordinary device and device 4 is a proxy demand device. The pre-associated service discovery processes is used to make these devices perform the service discovery process and related information exchange before establishing a link connection and then establish the link connection after confirming the target device.

To further reduce the service discovery power consumption of the proxy demand device 4, the proxy service discovery method proposed in the present application is used, and the proxy demand device 4 acquires the related proxy service discovery information of the devices 1 and 2 having the proxy function and performs the parameter negotiation, and it selects the device 1 or 2 as the proxy device of the proxy demand device 4 to perform the service discovery operation on behalf of the device 4, so that, at the same time of ensuring that the service discovery operation of the device 4 is normal, the device 4 does not need to remain in the listening state in each service discovery beacon frame period and remain in the working state within each service discovery interaction time window, thus prolonging the sleep time of the device 4, greatly reducing the power consumption of the device 4, and improving the working efficiency and overall performance of the service discovery network.

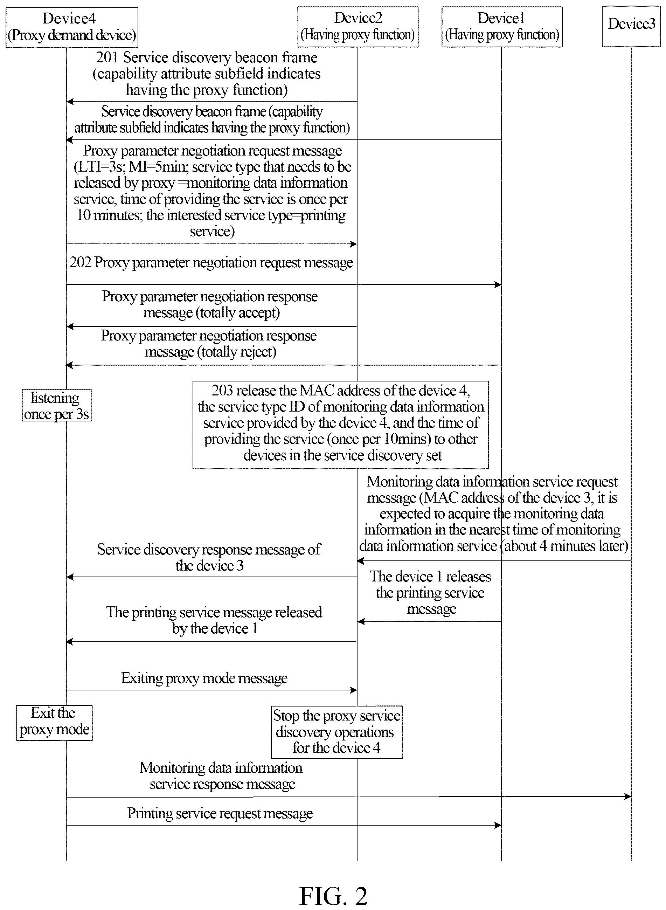

Specifically, the process of proxy service discovery is shown in FIG. 2, comprising the following steps 201 to 203.

In step 201: the proxy demand device 4 acquires the service discovery related information of the proxy device 1 and proxy device 2 having the proxy service discovery function.

Wherein, the acquisition mode may be that the proxy demand device 4 receives service discovery messages carrying the device proxy service discovery function sent from the device 1 and the device 2, wherein the service discovery message may be a service discovery beacon frame or a synchronization beacon frame or other service discovery messages.

It can also be that, the proxy demand device 4 sends a proxy demand message to all the devices in the service discovery set and receives proxy demand response messages returned by the device 1 and the device 2 (the device 3 does not have the proxy service function, and it will ignore the request message), wherein the message carries the related information of device proxy service discovery function.

The present embodiment selects to use the first acquisition mode.

In the first acquisition mode, preferably, a capability attribute subfield of proxy service discovery (such as the No.7 capability attribute subfield in Table 1) can be included in the field of service discovery network information element of the service discovery beacon frame or synchronization beacon frame, and the subfield indicates whether the device has the proxy function or not.

**Table 1 is a capability attribute subfield-numbering table of proxy service discovery**

| Attribute Field Number | Description |
|---|---|
| 0 | Reserved |
| 1 | connection capability attributes of the service discovery network |
| 2 | master control instruction attributes |
| 3 | AP infrastructure attributes |
| 4 | P2P operation attributes |
| 5 | Service discovery set attributes |
| 6 | Service discovery attributes |
| 7 | Proxy service discovery capability attributes |
| 8-220 | Reserved |
| 221 | Manufacturer customized attributes |
| 222-255 | Reserved |

In step 202: The proxy demand device 4 negotiates the specific parameters of the proxy service discovery with the proxy device 1 and the proxy device 2;
the specific negotiation process is as follows:
the proxy demand device 4 sending (in unicast or multicast mode) a proxy parameter negotiation request message to the proxy device 1 and the proxy device 2, wherein the request message carries at least one or more items of the following parameters expected by the proxy demand device 4:
   a listening time interval (LTI) of the proxy demand device, a service type identity (service ID) that needs to be advertised by the proxy, conditions or contents of services that can be provided in the service type that needs to be advertised by the proxy, interested service type identities (service ID) provided by other home network devices, interested conditions or contents of services that can be provided in the service types provided by other home network devices.

After receiving the request message, the device 1 and the device 2 send proxy parameter negotiation response messages to the proxy demand device 4, wherein the response message at least carries one of the following parameters:
an identity of totally accepting the proxy parameters, an identity of totally rejecting the proxy parameters, an identity of partially accepting the proxy parameters and a list of the accepted proxy parameters.
If the proxy parameter negotiation response messages returned by the device 1 and the device 2 comprise the identity of totally accepting the proxy parameters, the device 4 selects one of the devices as its proxy device according to the device feature, feedback delay and other parameters of the two devices.

In the present embodiment, the proxy parameter negotiation request message sent by the device 4 to the device 1 and the device 2 comprises: the listening time interval (LTI) of the proxy demand device is 3s, the maximum inactive time interval (MI) is 5 minutes, there is one service type identity (service ID) that needs to be advertised by the proxy and it is indicated as monitoring the data information service, the time of providing services is once in every 10 minutes, there is one interested service type identity (Service ID) provided by other home network devices and it is indicated as the printing service; the proxy parameter negotiation response message returned by the device 1 comprises the identity of totally rejecting the proxy parameters, and the proxy parameter negotiation response message returned by the device 2 comprises the identity of totally accepting the proxy parameters. Therefore, the device 2 is selected as the proxy device of the proxy demand device 4.

In step 203: the proxy device (device 2) performs the service discovery operations on behalf of the device 4, and remains the information exchange with the device 4.

Preferably, the specific contents of the device 2 performing the service discovery operation on behalf of the device 4 and maintaining the information exchange with the device 4 comprise:
the device 4 performing the periodic listening operation, and listening once in every 3s;
the device 2 advertising the MAC address of the device 4, the service type ID of the monitoring data information service provided by the device 4 and the time of providing the service (once in every 10 minutes) to other devices in the service discovery set;
if the device 2 receives response messages for the released monitoring data information service from other home network devices, the device 2 notifies the device 4 of the information within the nearest listening time period of the periodic listening time period, once in every 3s, of the device 4;
if the device 2 receives the printing service related information in which the device 4 is interested, the device 2 notifies the device 4 of the information within the nearest listening time period of the periodic listening time period, once in every 3s, of the device 4;
if the device 4 does not need the proxy, the device 4 sending an exiting proxy mode message to the device 2, and the device 2 stopping all the proxy operations for the device 4 after receiving the message;
If the device 2 cannot continue the proxy operation, the device 2 sending an exiting proxy mode message to the device 4 within the nearest listening time period of the periodic listening time period, once in every 3s, and the device 4 exiting the proxy mode after receiving the message.

Based on the abovementioned method, the specific method of the device 2 maintaining the information exchange with the device 4 further comprises:
the device 4 sending at least one message to the device 2 within the agreed maximum inactive time interval (5 minutes);
if the device 2 does not receive any messages from the device 4 within five minutes, the device 2 sending an exiting proxy mode message to the device 4 to stop all the proxy operations for the device 4.

In the present embodiment, the device 2 receives a response message for the released monitoring data information service from the device 3, and the message comprises the MAC address of the device 3 and expecting to acquire the monitoring data information within the nearest time of monitoring data information service (about 4 minutes later); the device 2 notifies the device 4 of the information in the nearest listening time period of the periodic listening time period, once in every 3s, of the device 4. After one minute, the device 2 receives the printing service related information, which the device 4 is interested in, sent by the device 1, and the device 2 notifies the device 4 of the information in the nearest listening time period of the periodic listening time period, once in every 3s, of the device 4. After receiving the abovementioned two messages, the device 4 decides to exit from the proxy mode and sends an exiting proxy mode message to the device 2, and it responds to the monitoring data information service request of the device 3, and interact directly with the device 1 about the related content of printing service.

The present embodiment realizes the proxy function of the service discovery of the home network device, and it makes a device having the proxy service discovery function perform the service discovery operations of the proxy demand devices on behalf of the proxy demand devices, so that these demand devices don't need to remain in the listening state in each service discovery beacon frame period or remain in the working state in each service discovery interaction time window at the same time of ensuring that the service discovery operations of these demand devices are performed normally, thus prolonging the sleep time of these devices, greatly reducing the power consumption of these devices and improving the working efficiency and overall performance of the service discovery network.

### The second embodiment

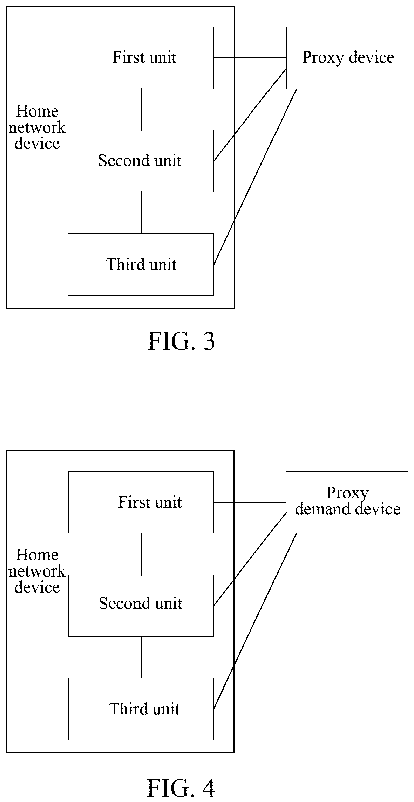

The present embodiment provides a home network device, which has a proxy demand on other devices in the home network, the device is shown in FIG. 3, comprising at least the following three units.

A first unit acquires the related information of proxy service discovery function of proxy devices having the proxy function in a home network;
the abovementioned first unit may acquire the service discovery related information of the proxy device in an active or passive way, which will not be limited here. For example, the first unit receives service discovery messages carrying the device proxy service discovery function sent from other home network devices, wherein the service discovery message is one of a service discovery beacon frame, a synchronization beacon frame and other service discovery messages. Or the first unit sends a proxy demand message to other home network devices, receives proxy demand response messages returned by other home network devices, and acquires the related information of device proxy service discovery function from the proxy demand response messages.

A second unit negotiates specific parameters of the proxy service discovery with the above proxy device;
specifically, the second unit may send a proxy parameter negotiation request message to the proxy device, wherein the proxy parameter negotiation request message carries specific parameters of the proxy service discovery expected by the proxy demand device, and it receives a proxy parameter negotiation response message fed back from the proxy device to implement the negotiation operation.

Wherein, the specific parameters of the proxy service discovery expected by the present proxy demand device comprises one or more of the following:
a listening time interval of the proxy demand device, a service type identity that needs to be advertised by the proxy, conditions or contents of services that can be provided in the service type that needs to be advertised by the proxy, interested service type identities provided by other home network devices, interested conditions or contents of services that can be provided in the service types provided by other home network devices.

The proxy parameter negotiation response message at least comprises any one or more of the following information:
an identity of totally accepting the expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

A third unit determines the service discovery operations performed by the proxy device on behalf of the proxy demand device and maintains an information exchange with the proxy devices.

It should be noted that, when two or more proxy devices include the identity of totally accepting the expected specific parameters of the proxy service discovery in the returned proxy parameter negotiation response messages, the third unit selects one of the devices as the proxy device.

### The third embodiment

The present embodiment provides a home network device, as shown in FIG. 4, it has proxy functionality and at least comprises the following three units.

A first unit sends the related information of proxy service discovery function of the present device to the proxy demand device having proxy demands;

Specifically, the process of the above first unit sending the related information of proxy service discovery function of the present device to the proxy demand device having proxy demands may comprise but is not limited to the following manners:
the first unit actively sending a service discovery message carrying the device proxy service discovery function to the proxy demand device, wherein the service discovery message is one of a service discovery beacon frame, a synchronization beacon frame and other service discovery messages. Or, the first unit receives a proxy demand message sent from the proxy demand device and feeds back a proxy demand response message, wherein the proxy demand response message comprises the related information of device proxy service discovery function.

A second unit negotiates specific parameters of the proxy service discovery with the proxy demand device;

The process of the abovementioned second unit negotiating the specific parameters of the proxy service discovery with the proxy demand device may refer to the following manner:
the second unit receiving a proxy parameter negotiation request message sent by the proxy demand device, wherein the proxy parameter negotiation request message carries specific parameters of the proxy service discovery expected by the proxy demand device, and feeding back a proxy parameter negotiation response message to the proxy device.

Wherein, the proxy parameter negotiation response message at least comprises any one or more of the following information:
an identity of totally accepting the expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

The specific parameters of the proxy service discovery expected by the proxy demand device comprise one or more of the following:
a listening time interval of the proxy demand device, a service type identity that needs to be advertised by the proxy, conditions or contents of services that can be provided in the service type that needs to be advertised by the proxy, interested service type identities provided by other home network devices, interested conditions or contents of services that can be provided in the service types provided by other home network devices.

A third unit performs service discovery operations on behalf of the proxy demand device after receiving a notification of deciding a proxy and maintains an information exchange with the proxy device.

Wherein, the service discovery operations performed on behalf of the proxy demand device comprises at least one or more of the following operations:
advertising the MAC address of the proxy demand device;
advertising the service type identity that the proxy demand device requests the proxy to advertise;
advertising conditions or contents of services that can be provided in the service type that the proxy demand device requests the proxy to advertise;
if the proxy device receives response messages for the advertised service type from other home network devices, the proxy device notifying the proxy demand device of the information;
if the proxy device receives the service type identity in which the proxy demand device is interested, or the proxy device receives conditions or contents of services that can be provided in the service type in which the proxy demand device is interested, the proxy device notifying the proxy demand device of the information.

Maintaining the information exchange with the proxy demand device comprises the following manners:
the proxy demand device performing a periodic listening operation;
if the proxy device has information to be notified to the proxy demand device, the proxy device sending the information to the proxy demand device in the periodic listening time period;
if the proxy demand device does not need the proxy, the proxy demand device sending an exiting proxy mode message to the proxy device, and the proxy device stopping all the proxy operations for the proxy demand device after receiving the message;
if the proxy device cannot continue the proxy operations, the proxy device sending an exiting proxy mode message to the proxy demand device within the periodic listening time period, and the proxy demand device exiting the proxy mode after receiving the message.

On the basis of the abovementioned information interaction, it may further comprises the following interaction manners:
the proxy demand device sending at least one message to the proxy device within an agreed time;
if the proxy device does not receive any message from the proxy demand device within the agreed time, the proxy device sending an exiting proxy mode message to the proxy device, and stopping all the proxy operations for the proxy demand device.

As can be seen from the abovementioned embodiments, the technical solution of the present application has the following beneficial effects:
the present application proposes two acquisition modes for service discovery information, one is that the proxy demand device passively receives the service discovery messages carrying the device proxy service discovery function sent from other devices, and this acquisition mode only requires adding the relevant proxy identity in the existing messages without adding new messages; the other is that the proxy demand device actively sends a proxy demand message to other devices and receives proxy demand response messages carrying the device proxy service discovery function returned from the other devices, and this acquisition mode enables the demand device to acquire the service discovery information of the devices having the proxy function in the shortest time rather than passively waiting for receiving.

The specific method proposed in the present application for the proxy device maintaining an information exchange with the proxy demand device is a special mechanism implementing the information exchange between devices in the non-associated state, and it ensures that the proxy device will notify the relevant information to the proxy demand device by negotiating and agreeing on a periodic working window (periodic listening and information transmission with a fixed time interval), and it implements the related mechanism for the proxy demand device and the proxy device maintaining the proxy mode and exiting the proxy mode. This mechanism makes the proxy demand device stay in sleep state for more time or perform non-service discovery operations, thereby lowering the power consumption of the proxy demand device and the complexity of implementing the service discovery operation.

In the proxy service discovery parameter negotiation and proxy service discovery operation proposed in the present application, the proxy device can advertise the service type provided by the proxy demand device to other devices, furthermore, it may also advertise conditions or contents of different service types that can be provided by the proxy demand device to other devices (for example, the service is only provided in a fixed time period or only provided to certain devices meeting conditions). On the one hand, these information can help other devices to accurately judge whether the service type is appropriate for the device or not, thereby reducing unnecessary message interaction; on the other hand, it may also implement a number of new non-real-time service operations (such as service reservation, etc.). For example, other devices learn via the proxy device that a certain service type of the proxy demand device is only provided in the fixed time period, and if the device thinks that it can wait until the time that the service can be provided, the device can send a message for reserving the service type to the proxy device.

In the proxy service discovery parameter negotiation and proxy service discovery operation proposed in the present application, the proxy device can not only ensure that the proxy demand device receives the service discovery message related to it, but also help the proxy demand device to search for services which it is interested in, moreover, it also may provide conditions or contents of services that can be provided by the interested service type. These information can help the proxy demand device to accurately judge whether the interested service type is suitable for the device or not, so as to perform subsequent operations.

Of course, the present invention may also have other various embodiments, and those skilled in the art may make various appropriate changes and modifications according to the embodiments of the present invention, and these appropriate changes and modifications shall belong to the protection scope of the appended claims of the present invention.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

### Industrial Applicability

The technical solution of the present application makes certain home network devices or makes home network devices under certain special conditions negotiate with a certain proxy device, so that within a certain time period or in the case that special conditions are triggered, a device having the proxy service discovery function can perform the service discovery operations on behalf of these devices. Thereby the sleep time of these devices is prolonged at the same time of ensuring that the service discovery operations of these devices are performed normally, which greatly reduces the power consumption of these devices and improves the working efficiency and overall performance of the home network service discovery.

## Claims

1. A method for proxy service discovery of a home network, comprising:
a proxy demand device acquiring related information of proxy service discovery function of proxy devices (101);
the proxy demand device negotiating specific parameters of proxy service discovery with the proxy devices (102);
the proxy device performing service discovery operations of the proxy demand device on behalf of the proxy demand device, and maintaining an information exchange with the proxy demand device (103);
wherein the method is further **characterized in that** the process of the proxy demand device negotiating the specific parameters of the proxy service discovery with the proxy device is as follows:
the proxy demand device sending a proxy parameter negotiation request message to the proxy device (202), wherein the proxy parameter negotiation request message carries specific parameters of proxy service discovery expected by the proxy demand device;
the proxy device sending a proxy parameter negotiation response message to the proxy demand device;
wherein the specific parameters of the proxy service discovery expected by the proxy demand device comprise one or more of following:
a listening time interval of the proxy demand device, conditions of services that can be provided in a service type that needs to be advertised by the proxy, interested service type identities provided by other home network devices, interested conditions or contents of services that can be provided in service types provided by other home network devices.

2. The method of claim 1, wherein, the proxy device performing service discovery operations of the proxy demand device on behalf of the proxy demand device comprise at least one or more of the following operations:
advertising a MAC address of the proxy demand device (203);
advertising the service type identity that the proxy demand device requests a proxy to advertise (203);
advertising conditions or content of services that can be provided in the service type that the proxy demand device requests the proxy to advertise (203);
if the proxy device receives response messages for the advertised service type from other home network devices, the proxy device notifying the proxy demand device of the response messages;
if the proxy device receives the service type identity in which the proxy demand device is interested, or the proxy device receives conditions or contents of services that can be provided in the service type in which the proxy demand device is interested, the proxy device notifying the proxy demand device of the received information.

3. The method of claim 1, wherein, the proxy device maintains the information exchange with the proxy demand device in following manners:
the proxy demand device performing a periodic listening operation;
if the proxy device has information to be notified to the proxy demand device, the proxy device sending the information to the proxy demand device within the periodic listening time period;
if the proxy demand device does not need a proxy, the proxy demand device sending an exiting proxy mode message to the proxy device, and the proxy device stops all proxy operations for the proxy demand device after receiving the message;
if the proxy device cannot continue the proxy operations, the proxy device sending the exiting proxy mode message to the proxy demand device in the periodic listening time period, and the proxy demand device exiting the proxy mode after receiving the message.

4. The method of claim 3, wherein, the proxy device further maintains the information exchange with the proxy demand device in following manners:
the proxy demand device sending at least one message to the proxy device within an agreed time;
if the proxy device does not receive any message from the proxy demand device within the agreed time, the proxy device sending the exiting proxy mode message to the proxy demand device, and stopping all proxy operations for the proxy demand device.

5. The method of any one of claims 1 to 4, wherein, the process of the proxy demand device acquiring service discovery related information of the proxy device is as follows:
the proxy demand device receiving service discovery messages carrying device proxy service discovery function sent from other home network devices, wherein the service discovery message is one of a service discovery beacon frame, a synchronization beacon frame and other service discovery messages; or
the proxy demand device sending a proxy demand message to other home network devices, receiving proxy demand response messages returned by the other home network devices, and acquiring related information of device proxy service discovery function from the proxy demand response messages.

6. The method of claim 1,
wherein the proxy parameter negotiation response message carries at least any of following information:
an identity of totally accepting expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

7. The method of claim 6, wherein, the method further comprises:
when two or more proxy devices include the identity of totally accepting the expected specific parameters of the proxy service discovery in a returned proxy parameter negotiation response message, the proxy demand device selecting one of the devices as the proxy device.

8. A home network device, comprising:
a first unit, configured to: acquire related information of proxy service discovery function of proxy devices having proxy function in a home network;
a second unit, configured to: negotiate specific parameters of proxy service discovery with the proxy devices;
a third unit, configured to: determine service discovery operations of present proxy demand device performed by the proxy device on behalf of the present proxy demand device, and maintain an information exchange with the proxy devices; **characterized in that** the second device is configured to: the process of negotiating the specific parameters of the proxy service discovery with the proxy devices is as follows:
the second unit sending a proxy parameter negotiation request message to the proxy devices, wherein the proxy parameter negotiation request message carries specific parameters of the proxy service discovery expected by the present proxy demand device, and receiving a proxy parameter negotiation response message fed back by the proxy device;
wherein the specific parameters of the proxy service discovery expected by the present proxy demand device comprise one or more of following:
a listening time interval of the proxy demand device, conditions of services that can be provided in a service type that needs to be advertised by the proxy, interested service type identities provided by other home network devices, interested conditions or contents of services that can be provided in service types provided by other home network devices;

9. The device of claim 8, wherein, the first unit is configured to: the process of acquiring the service discovery related information of the proxy devices is as follows:
the first unit receiving service discovery messages carrying device proxy service discovery function sent from other home network devices, wherein the service discovery message is one of a service discovery beacon frame, a synchronization beacon frame and other service discovery messages; or
the first unit sending a proxy demand message to other home network devices, receiving proxy demand response messages returned by the other home network devices, and acquiring related information of device proxy service discovery function from the proxy demand response messages.

10. The device of claim 8, wherein,
the proxy parameter negotiation response message at least comprises any one or more of following information:
an identity of totally accepting expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

11. The device of claim 8, wherein,
the third unit is configured to: when two or more proxy devices include the identity of totally accepting the expected specific parameters of the proxy service discovery in returned proxy parameter negotiation response messages, select one of the devices as the proxy device.

12. A home network device with proxy function, comprising:
a first unit, configured to: send related information of proxy service discovery function of a present device to a proxy demand device having proxy demands;
a second unit, configured to: negotiate specific parameters of proxy service discovery with the proxy demand device;
a third unit, configured to: after receiving a notification of deciding a proxy, perform service discovery operations of the proxy demand device on behalf of the proxy demand device, and maintain an information exchange with the proxy device; **characterized in that** the second device is configured to: the process of negotiating the specific parameters of the proxy service discovery with the proxy demand device is as follows;
the second unit receiving a proxy parameter negotiation request message sent by the proxy demand device, wherein the proxy parameter negotiation request message carries specific parameters of the proxy service discovery expected by the proxy demand device, and feeding back a proxy parameter negotiation response message to the proxy device;
wherein the specific parameters of the proxy service discovery expected by the proxy demand device comprises one or more of following:
a listening time interval of the proxy demand device, conditions of services that can be provided in a service type that needs to be advertised by the proxy, interested service type identities provided by other home network devices, interested conditions or contents of services that can be provided in service types provided by other home network devices.

13. The device of claim 12, wherein, the third unit is configured to: performing the service discovery operations of the proxy demand device on behalf of the proxy demand device comprises at least one or more of following operations:
advertising a MAC address of the proxy demand device;
advertising the service type identity that the proxy demand device requests a proxy to advertise;
advertising conditions or content of services that can be provided in the service type that the proxy demand device requests the proxy to advertise;
if the proxy device receives response messages for the advertised service type from other home network devices, the proxy device notifying the proxy demand device of the response messages;
if the proxy device receives the service type identity in which the proxy demand device is interested, or the proxy device receives conditions or contents of services that can be provided in the service type in which the proxy demand device is interested, the proxy device notifying the proxy demand device of the received information;
the third device is configured to, maintain the information exchange with the proxy demand device in a following manner:
the proxy demand device performing a periodic listening operation;
if the proxy device has information to be notified to the proxy demand device, the proxy device sending the information to the proxy demand device in the periodic listening time period;
if the proxy demand device does not need a proxy, the proxy demand device sending an exiting proxy mode message to the proxy device, and the proxy device stopping all proxy operations for the proxy demand device after receiving the message;
if the proxy device cannot continue the proxy operations, the proxy device sending the exiting proxy mode message to the proxy demand device within the periodic listening time period, and the proxy demand device exiting the proxy mode after receiving the message.

14. The device of claim 13, wherein, the third unit is configured to: further maintain the information exchange with the proxy demand device in a following manner:
the proxy demand device sending at least one message to the proxy device within an agreed time;
if the proxy device does not receive any message from the proxy demand device within the agreed time, the proxy device sending the exiting proxy mode message to the proxy demand device, and stopping all proxy operations for the proxy demand device.

15. The device of any one of claims 12 to 14, wherein, the first unit is configured to: the process of sending the related information of proxy service discovery function of the present device to the proxy demand device having proxy demands is as follows:
the first unit actively sending a service discovery message carrying device proxy service discovery function to the proxy demand device, wherein the service discovery message is one of a service discovery beacon frame, a synchronization beacon frame and other service discovery messages; or
the first unit receiving a proxy demand message sent from the proxy demand device, and feeding back a proxy demand response message, wherein the proxy demand response message comprises related information of the device proxy service discovery function;
or
wherein, the proxy parameter negotiation response message at least comprises any one or more of following information:
an identity of totally accepting expected specific parameters of the proxy service discovery, an identity of totally rejecting the expected specific parameters of the proxy service discovery, an identity of partially accepting the expected specific parameters of the proxy service discovery and a list of accepted specific parameters of the proxy service discovery.

## Patentansprüche

1. Verfahren zur Proxy-Dienstfeststellung eines Heimnetzwerks, das umfasst, dass:
eine Proxy-Anforderungsvorrichtung zugehörige Informationen einer Proxy-Dienstfeststellungsfunktion von Proxy-Vorrichtungen (101) erfasst;
die Proxy-Anforderungsvorrichtung spezielle Parameter der Proxy-Dienstfeststellung mit den Proxy-Vorrichtungen (102) negoziiert;
die Proxy-Vorrichtung Dienstfeststellungsoperationen der Proxy-Anforderungsvorrichtung im Auftrag der Proxy-Anforderungsvorrichtung ausführt und einen Informationsaustausch mit der Proxy-Anforderungsvorrichtung (103) aufrecht erhält; wobei das Verfahren des Weiteren **dadurch gekennzeichnet ist, dass** der Prozess, bei dem die Proxy-Anforderungsvorrichtung die speziellen Parameter der Proxy-Dienstfeststellung mit der Proxy-Vorrichtung negoziiert, folgendermaßen abläuft:
die Proxy-Anforderungsvorrichtung sendet eine Proxy-Parameternegoziierungs-Anforderungsmeldung an die Proxy-Vorrichtung (202), wobei die Proxy-Parameternegoziierungs-Anforderungsmeldung spezielle Parameter der Proxy-Dienstfeststellung transportiert, die durch die Proxy-Anforderungsvorrichtung erwartet werden;
die Proxy-Vorrichtung sendet eine Proxy-Parameternegoziierungs-Antwortnachricht an die Proxy-Anforderungsvorrichtung;
wobei die speziellen Parameter der Proxy-Dienstfeststellung, die durch die Proxy-Anforderungsvorrichtung erwartet werden, eines oder mehrere von Folgendem umfassen:
ein Lauschzeitintervall der Proxy-Anforderungsvorrichtung, Bedingungen von Diensten, die in einer Dienst-Art bereitgestellt werden können, die durch den Proxy angekündigt werden muss, interessierte Dienst-Art-Identitäten, die durch andere Heimnetzwerkvorrichtungen bereitgestellt werden, interessierte Bedingungen oder Inhalte von Diensten, die in Dienst-Arten bereitgestellt werden können, die durch andere Heimnetzwerkvorrichtungen bereitgestellt werden.

2. Verfahren nach Anspruch 1, wobei die Aktion, bei der die Proxy-Vorrichtung Dienstfeststellungsoperationen der Proxy-Anforderungsvorrichtung im Auftrag der Proxy-Anforderungsvorrichtung ausführt, mindestens eine oder mehrere der folgenden Operationen umfasst:
Ankündigen einer MAC-Adresse der Proxy-Anforderungsvorrichtung (203);
Ankündigen der Dienst-Art-Identität, deren Ankündigung die Proxy-Anforderungsvorrichtung von einem Proxy verlangt (203);
Ankündigen von Bedingungen oder Inhalten von Diensten, die in der Dienst-Art bereitgestellt werden können, deren Ankündigung die Proxy-Anforderungsvorrichtung von dem Proxy verlangt (203);
falls die Proxy-Vorrichtung Antwortnachrichten für die angekündigte Dienst-Art von anderen Heimnetzwerkvorrichtungen empfängt, so benachrichtigt die Proxy-Vorrichtung die Proxy-Anforderungsvorrichtung über die Antwortnachrichten;
falls die Proxy-Vorrichtung die Dienst-Art-Identität empfängt, an der die Proxy-Anforderungsvorrichtung interessiert ist, oder die Proxy-Vorrichtung Bedingungen oder Inhalte von Diensten empfängt, die in der Dienst-Art bereitgestellt werden können, an der die Proxy-Anforderungsvorrichtung interessiert ist, so benachrichtigt die Proxy-Vorrichtung die Proxy-Anforderungsvorrichtung über die empfangenen Informationen.

3. Verfahren nach Anspruch 1, wobei die Proxy-Vorrichtung den Informationsaustausch mit der Proxy-Anforderungsvorrichtung auf folgende Weise aufrecht erhält:
die Proxy-Anforderungsvorrichtung führt eine periodische Lauschoperation aus;
falls die Proxy-Vorrichtung Informationen hat, die der Proxy-Anforderungsvorrichtung bekannt gegeben werden müssen, so sendet die Proxy-Vorrichtung die Informationen an die Proxy-Anforderungsvorrichtung innerhalb des periodischen Lauschzeitraums;
falls die Proxy-Anforderungsvorrichtung keinen Proxy braucht, so sendet die Proxy-Anforderungsvorrichtung eine Proxymodus-verlassen-Meldung an die Proxy-Vorrichtung, und die Proxy-Vorrichtung stoppt alle Proxy-Operationen für die Proxy-Anforderungsvorrichtung nach dem Empfangen der Meldung;
falls die Proxy-Vorrichtung die Proxy-Operationen nicht fortsetzen kann, so sendet die Proxy-Vorrichtung die Proxymodus-verlassen-Meldung an die Proxy-Anforderungsvorrichtung in dem periodischen Lauschzeitraum, und die Proxy-Anforderungsvorrichtung verlässt den Proxymodus nach dem Empfangen der Meldung.

4. Verfahren nach Anspruch 3, wobei die Proxy-Vorrichtung des Weiteren den Informationsaustausch mit der Proxy-Anforderungsvorrichtung auf folgende Weise aufrecht erhält:
die Proxy-Anforderungsvorrichtung sendet mindestens eine Meldung an die Proxy-Vorrichtung innerhalb einer vereinbarten Zeit;
falls die Proxy-Vorrichtung keine Meldung von der Proxy-Anforderungsvorrichtung innerhalb der vereinbarten Zeit empfängt, so sendet die Proxy-Vorrichtung die Proxymodus-verlassen-Meldung an die Proxy-Anforderungsvorrichtung und stoppt alle Proxy-Operationen für die Proxy-Anforderungsvorrichtung.

5. Verfahren nach einem der Ansprüche 1 bis 4, wobei der Prozess, bei dem die Proxy-Anforderungsvorrichtung dienstfeststellungszugehörige Informationen der Proxy-Vorrichtung erfasst, folgendermaßen abläuft:
die Proxy-Anforderungsvorrichtung empfängt Dienstfeststellungsmeldungen, die eine Vorrichtungsproxy-Dienstfeststellungsfunktion transportieren, die von anderen Heimnetzwerkvorrichtungen gesendet wurden, wobei die Dienstfeststellungsmeldung eines von Folgendem ist:
Dienstfeststellungs-Peilframes, ein Synchronisations-Peilframe, und andere Dienstfeststellungsmeldungen; oder
die Proxy-Anforderungsvorrichtung sendet eine Proxy-Anforderungsmeldung zu anderen Heimnetzwerkvorrichtungen, empfängt Proxy-Anforderungsantwortnachrichten, die durch die anderen Heimnetzwerkvorrichtungen zurückgesendet werden, und erfasst zugehörige Informationen der Vorrichtungsproxy-Dienstfeststellungsfunktion aus den Proxy-Anforderungsantwortnachrichten.

6. Verfahren nach Anspruch 1,
wobei die Proxy-Parameternegoziierungs-Antwortnachricht mindestens eine von folgenden Informationen transportiert:
eine Identität des vollständigen Akzeptierens erwarteter spezieller Parameter der Proxy-Dienstfeststellung, eine Identität des vollständigen Ablehnens der erwarteten speziellen Parameter der Proxy-Dienstfeststellung, eine Identität des teilweisen Akzeptierens der erwarteten speziellen Parameter der Proxy-Dienstfeststellung, und eine Liste mit akzeptierten speziellen Parametern der Proxy-Dienstfeststellung.

7. Verfahren nach Anspruch 6, wobei das Verfahren des Weiteren Folgendes umfasst:
wenn zwei oder mehr Proxy-Vorrichtungen die Identität des vollständigen Akzeptierens der erwarteten speziellen Parameter der Proxy-Dienstfeststellung in einer zurückgesendeten Proxy-Parameternegoziierungs-Antwortnachricht enthalten, so wählt die Proxy-Anforderungsvorrichtung eine der Vorrichtungen als die Proxy-Vorrichtung aus.

8. Heimnetzwerkvorrichtung, die Folgendes umfasst:
eine erste Einheit, die dafür konfiguriert ist, zugehörige Informationen einer Proxy-Dienstfeststellungsfunktion von Proxy-Vorrichtungen, die eine Proxy-Funktion in einem Heimnetzwerk haben, zu erfassen;
eine zweite Einheit, die dafür konfiguriert ist, spezielle Parameter einer Proxy-Dienstfeststellung mit den Proxy-Vorrichtungen zu negoziieren;
eine dritte Einheit, die dafür konfiguriert ist, Dienstfeststellungsoperationen einer vorhandenen Proxy-Anforderungsvorrichtung zu bestimmen, die durch die Proxy-Vorrichtung im Auftrag der vorhandenen Proxy-Anforderungsvorrichtung ausgeführt werden, und einen Informationsaustausch mit den Proxy-Vorrichtungen aufrecht zu erhalten;
**dadurch gekennzeichnet, dass**
die zweite Vorrichtung so konfiguriert ist, dass der Prozess des Negoziierens der speziellen Parameter der Proxy-Dienstfeststellung mit den Proxy-Vorrichtungen folgendermaßen abläuft:
die zweite Einheit sendet eine Proxy-Parameternegoziierungs-Anforderungsmeldung an die Proxy-Vorrichtungen, wobei die Proxy-Parameternegoziierungs-Anforderungsmeldung spezielle Parameter der Proxy-Dienstfeststellung transportiert, durch die vorhandene Proxy-Anforderungsvorrichtung erwartet werden, und eine Proxy-Parameternegoziierungs-Antwortnachricht empfängt, die durch die Proxy-Vorrichtung zurückgemeldet wird;
wobei die speziellen Parameter der Proxy-Dienstfeststellung, die durch die vorhandene Proxy-Anforderungsvorrichtung erwartet wird, eines oder mehrere von Folgendem umfassen:
ein Lauschzeitintervall der Proxy-Anforderungsvorrichtung, Bedingungen von Diensten, die in einer Dienst-Art bereitgestellt werden können, die durch den Proxy angekündigt werden muss, interessierte Dienst-Art-Identitäten, die durch andere Heimnetzwerkvorrichtungen bereitgestellt werden, interessierte Bedingungen oder Inhalte von Diensten, die in Dienst-Arten bereitgestellt werden können, die durch andere Heimnetzwerkvorrichtungen bereitgestellt werden.

9. Vorrichtung nach Anspruch 8, wobei die erste Einheit so konfiguriert ist, dass der Prozess des Erfassens der dienstfeststellungszugehörigen Informationen der Proxy-Vorrichtungen folgendermaßen abläuft:
die erste Einheit empfängt Dienstfeststellungsmeldungen, die eine Vorrichtungsproxy-Dienstfeststellungsfunktion transportieren, die von anderen Heimnetzwerkvorrichtungen gesendet wurde, wobei die Dienstfeststellungsmeldung eines von Folgendem ist: Dienstfeststellungs-Peilframes, ein Synchronisations-Peilframe, und andere Dienstfeststellungsmeldungen; oder
die erste Einheit sendet eine Proxy-Anforderungsmeldung zu anderen Heimnetzwerkvorrichtungen, empfängt Proxy-Anforderungsantwortnachrichten, die durch die anderen Heimnetzwerkvorrichtungen zurückgesendet werden, und erfasst zugehörige Informationen einer Vorrichtungsproxy-Dienstfeststellungsfunktion aus den Proxy-Anforderungsantwortnachrichten.

10. Vorrichtung nach Anspruch 8, wobei
die Proxy-Parameternegoziierungs-Antwortnachricht mindestens eine oder mehrere der folgenden Informationen umfasst:
eine Identität des vollständigen Akzeptierens erwarteter spezieller Parameter der Proxy-Dienstfeststellung, eine Identität des vollständigen Ablehnens der erwarteten speziellen Parameter der Proxy-Dienstfeststellung, eine Identität des teilweisen Akzeptierens der erwarteten speziellen Parameter der Proxy-Dienstfeststellung, und eine Liste mit akzeptierten speziellen Parametern der Proxy-Dienstfeststellung.

11. Vorrichtung nach Anspruch 8, wobei
die dritte Einheit dafür konfiguriert ist, wenn zwei oder mehr Proxy-Vorrichtungen die Identität des vollständigen Akzeptierens der erwarteten speziellen Parameter der Proxy-Dienstfeststellung in zurückgesendeten Proxy-Parameternegoziierungs-Antwortnachrichten enthalten, eine der Vorrichtungen als die Proxy-Vorrichtung auszuwählen.

12. Heimnetzwerkvorrichtung mit Proxy-Funktion, die Folgendes umfasst:
eine erste Einheit, die dafür konfiguriert ist, zugehörige Informationen einer Proxy-Dienstfeststellungsfunktion einer vorhandenen Vorrichtung an eine Proxy-Anforderungsvorrichtung zu senden, die Proxy-Anforderungen hat;
eine zweite Einheit, die dafür konfiguriert ist, spezielle Parameter einer Proxy-Dienstfeststellung mit der Proxy-Anforderungsvorrichtung zu negoziieren;
eine dritte Einheit, die dafür konfiguriert ist, nach dem Empfangen einer Benachrichtigung über eine Entscheidung bezüglich eines Proxy Dienstfeststellungsoperationen der Proxy-Anforderungsvorrichtung im Auftrag der Proxy-Anforderungsvorrichtung auszuführen und einen Informationsaustausch mit der Proxy-Vorrichtung aufrecht zu erhalten;
**dadurch gekennzeichnet, dass** die zweite Vorrichtung so konfiguriert ist, dass der Prozess des Negoziierens der speziellen Parameter der Proxy-Dienstfeststellung mit der Proxy-Anforderungsvorrichtung folgendermaßen abläuft:
die zweite Einheit empfängt eine Proxy-Parameternegoziierungs-Anforderungsmeldung, die durch die Proxy-Anforderungsvorrichtung gesendet wurde, wobei die Proxy-Parameternegoziierungs-Anforderungsmeldung spezielle Parameter der Proxy-Dienstfeststellung transportiert, die durch die Proxy-Anforderungsvorrichtung erwartet werden, und meldet eine Proxy-Parameternegoziierungs-Antwortnachricht an die Proxy-Vorrichtung zurück;
wobei die speziellen Parameter der Proxy-Dienstfeststellung, die durch die Proxy-Anforderungsvorrichtung erwartet werden, eines oder mehrere von Folgendem umfassen:
ein Lauschzeitintervall der Proxy-Anforderungsvorrichtung, Bedingungen von Diensten, die in einer Dienst-Art bereitgestellt werden können, die durch den Proxy angekündigt werden muss, interessierte Dienst-Art Identitäten, die durch andere Heimnetzwerkvorrichtungen bereitgestellt werden, interessierte Bedingungen oder Inhalte von Diensten, die in Dienst-Arten bereitgestellt werden können, die durch andere Heimnetzwerkvorrichtungen bereitgestellt werden.

13. Vorrichtung nach Anspruch 12, wobei die dritte Einheit so konfiguriert ist, dass das Ausführen der Dienstfeststellungsoperationen der Proxy-Anforderungsvorrichtung im Auftrag der Proxy-Anforderungsvorrichtung mindestens eine oder mehrere von folgenden Operationen umfasst:
Ankündigen einer MAC-Adresse der Proxy-Anforderungsvorrichtung; Ankündigen der Dienst-Art-Identität, deren Ankündigung die Proxy-Anforderungsvorrichtung von einem Proxy verlangt;
Ankündigen von Bedingungen oder Inhalten von Diensten, die in der Dienst-Art bereitgestellt werden können, deren Ankündigung die Proxy-Anforderungsvorrichtung von dem Proxy verlangt;
falls die Proxy-Vorrichtung Antwortnachrichten für die angekündigte Dienst-Art von anderen Heimnetzwerkvorrichtungen empfängt, so benachrichtigt die Proxy-Vorrichtung die Proxy-Anforderungsvorrichtung über die Antwortnachrichten;
falls die Proxy-Vorrichtung die Dienst-Art-Identität empfängt, an der die Proxy-Anforderungsvorrichtung interessiert ist, oder die Proxy-Vorrichtung Bedingungen oder Inhalte von Diensten empfängt, die in der Dienst-Art bereitgestellt werden können, an der die Proxy-Anforderungsvorrichtung interessiert ist, so benachrichtigt die Proxy-Vorrichtung die Proxy-Anforderungsvorrichtung über die empfangenen Informationen;
wobei die dritte Vorrichtung dafür konfiguriert ist, den Informationsaustausch mit der Proxy-Anforderungsvorrichtung in der folgenden Weise aufrecht zu erhalten:
die Proxy-Anforderungsvorrichtung führt eine periodische Lauschoperation aus;
falls die Proxy-Vorrichtung Informationen hat, die der Proxy-Anforderungsvorrichtung bekannt gegeben werden müssen, so sendet die Proxy-Vorrichtung die Informationen an die Proxy-Anforderungsvorrichtung in dem periodischen Lauschzeitraum;
falls die Proxy-Anforderungsvorrichtung keinen Proxy braucht, so sendet die Proxy-Anforderungsvorrichtung eine Proxymodus-verlassen-Meldung an die Proxy-Vorrichtung, und die Proxy-Vorrichtung stoppt alle Proxy-Operationen für die Proxy-Anforderungsvorrichtung nach dem Empfangen der Meldung;
falls die Proxy-Vorrichtung die Proxy-Operationen nicht fortsetzen kann, so sendet die Proxy-Vorrichtung die Proxymodus-verlassen-Meldung an die Proxy-Anforderungsvorrichtung innerhalb des periodischen Lauschzeitraums, und die Proxy-Anforderungsvorrichtung verlässt den Proxymodus nach dem Empfangen der Meldung.

14. Vorrichtung nach Anspruch 13, wobei die dritte Einheit dafür konfiguriert ist, den Informationsaustausch mit der Proxy-Anforderungsvorrichtung des Weiteren in der folgenden Weise aufrecht zu erhalten:
die Proxy-Anforderungsvorrichtung sendet mindestens eine Meldung an die Proxy-Vorrichtung innerhalb einer vereinbarten Zeit;
falls die Proxy-Vorrichtung keine Meldung von der Proxy-Anforderungsvorrichtung innerhalb der vereinbarten Zeit empfängt, so sendet die Proxy-Vorrichtung die Proxymodus-verlassen-Meldung an die Proxy-Anforderungsvorrichtung und stoppt alle Proxy-Operationen für die Proxy-Anforderungsvorrichtung.

15. Vorrichtung nach einem der Ansprüche 12 bis 14, wobei die erste Einheit so konfiguriert ist, dass der Prozess des Sendens der zugehörigen Informationen einer Proxy-Dienstfeststellungsfunktion der vorhandenen Vorrichtung an die Proxy-Anforderungsvorrichtung, die Proxy-Anforderungen hat, folgendermaßen abläuft:
die erste Einheit sendet aktiv eine Dienstfeststellungsmeldung, die eine Vorrichtungsproxy-Dienstfeststellungsfunktion transportiert, an die Proxy-Anforderungsvorrichtung, wobei die Dienstfeststellungsmeldung eines von Folgendem ist: ein Dienstfeststellungs-Peilframe, ein Synchronisations-Peilframe, und andere Dienstfeststellungsmeldungen; oder
die erste Einheit empfängt eine Proxy-Anforderungsmeldung, die von der Proxy-Anforderungsvorrichtung gesendet wurde, und meldet eine Proxy-Anforderungsantwortnachricht zurück, wobei die Proxy-Anforderungsantwortnachricht zugehörige Informationen einer Vorrichtungsproxy-Dienstfeststellungsfunktion umfasst; oder
wobei die Proxy-Parameternegoziierungs-Antwortnachricht mindestens eine oder mehrere der folgenden Informationen umfasst:
eine Identität des vollständigen Akzeptierens erwarteter spezieller Parameter der Proxy-Dienstfeststellung, eine Identität des vollständigen Ablehnens der erwarteten speziellen Parameter der Proxy-Dienstfeststellung, eine Identität des teilweisen Akzeptierens der erwarteten speziellen Parameter der Proxy-Dienstfeststellung, und eine Liste mit akzeptierten speziellen Parametern der Proxy-Dienstfeststellung.

## Revendications

1. Procédé de découverte de service proxy d'un réseau de rattachement, comprenant :
un dispositif de demande proxy acquérant des informations associées de fonction de découverte de service proxy de dispositifs proxy (101) ;
le dispositif de demande proxy négociant des paramètres spécifiques de découverte de service proxy avec les dispositifs proxy (102) ;
le dispositif proxy effectuant des opérations de découverte de service du dispositif de demande proxy pour le compte du dispositif de demande proxy, et maintenant un échange d'informations avec le dispositif de demande proxy (103) ;
dans lequel le procédé est en outre **caractérisé en ce que** le processus du dispositif de demande proxy négociant les paramètres spécifiques de la découverte de service proxy avec le dispositif proxy est le suivant
le dispositif de demande proxy envoyant un message de demande de négociation de paramètres proxy au dispositif proxy (202), dans lequel le message de demande de négociation de paramètres proxy porte des paramètres spécifiques de découverte de service proxy attendus par le dispositif de demande proxy ;
le dispositif proxy envoyant un message de réponse de négociation de paramètres proxy au dispositif de demande proxy ;
dans lequel les paramètres spécifiques de la découverte de service proxy attendus par le dispositif de demande proxy comprennent un ou plusieurs de :
un intervalle de temps d'écoute du dispositif de demande proxy, des conditions de services qui peuvent être fournis dans un type de service devant être annoncées par le proxy, des identités de types de services intéressés fournies par d'autres dispositifs de réseau de rattachement, des conditions ou des contenus de services intéressés qui peuvent être fournis dans des types de services fournis par d'autres dispositifs de réseau de rattachement.

2. Procédé selon la revendication 1, dans lequel le dispositif proxy effectuant des opérations de découverte de service du dispositif de demande proxy pour le compte du dispositif de demande proxy comprend au moins une ou plusieurs des opérations suivantes :
l'annonce d'une adresse MAC du dispositif de demande proxy (203) ;
l'annonce de l'identité de type de service que le dispositif de demande proxy demande à un proxy d'annoncer (203) ;
l'annonce de conditions ou de contenus de services qui peuvent être fournis dans le type de service que le dispositif de demande proxy demande au proxy d'annoncer (203) ;
si le dispositif proxy reçoit des messages de réponse pour le type de service annoncé en provenance d'autres dispositifs de réseau de rattachement, le dispositif proxy notifiant les messages de réponse au dispositif de demande proxy ;
si le dispositif proxy reçoit l'identité de type de service par lequel le dispositif de demande proxy est intéressé, ou le dispositif proxy reçoit des conditions ou des contenus de services qui peuvent être fournis dans le type de service par lequel le dispositif de demande proxy est intéressé, le dispositif proxy notifiant les informations reçues au dispositif de demande proxy.

3. Procédé selon la revendication 1, dans lequel le dispositif proxy maintient l'échange d'informations avec le dispositif de demande proxy selon les manières suivantes :
le dispositif de demande proxy effectuant une opération d'écoute périodique ;
si le dispositif proxy a des informations à notifier au dispositif de demande proxy, le dispositif proxy envoyant les informations au dispositif de demande proxy au cours de la période de temps d'écoute périodique ;
si le dispositif de demande proxy n'a pas besoin d'un proxy, le dispositif de demande proxy envoyant un message de sortie de mode proxy au dispositif proxy, et le dispositif proxy arrêtant toutes les opérations proxy pour le dispositif de demande proxy après la réception du message ;
si le dispositif proxy ne peut pas continuer les opérations proxy, le dispositif proxy envoyant le message de sortie de mode proxy au dispositif de demande proxy au cours de la période de temps d'écoute périodique, et le dispositif de demande proxy sortant du mode proxy après la réception du message.

4. Procédé selon la revendication 3, dans lequel le dispositif proxy maintient en outre l'échange d'informations avec le dispositif de demande proxy selon les manières suivantes :
le dispositif de demande proxy envoyant au moins un message au dispositif proxy au cours d'un temps convenu ;
si le dispositif proxy ne reçoit pas de message en provenance du dispositif de demande proxy au cours du temps convenu, le dispositif proxy envoyant le message de sortie de mode proxy au dispositif de demande proxy et arrêtant toutes les opérations proxy pour le dispositif de demande proxy.

5. Procédé selon l'une quelconque des revendications 1 à 4, dans lequel le processus du dispositif de demande proxy acquérant des informations associées de découverte de service du dispositif proxy est le suivant :
le dispositif de demande proxy recevant des messages de découverte de services portant une fonction de découverte de service proxy de dispositif envoyée depuis d'autres dispositifs de réseau de rattachement, dans lequel le message de découverte de service est l'un d'une trame de balise de découverte de service, d'une trame de balise de synchronisation et d'autres messages de découverte de service ; ou
le dispositif de demande proxy envoyant un message de demande proxy à d'autres dispositifs de réseau de rattachement, recevant des messages de réponse de demande proxy renvoyés par les autres dispositifs de réseau de rattachement, et acquérant des informations associées de fonction de découverte de service proxy de dispositif à partir des messages de réponse de demande proxy.

6. Procédé selon la revendication 1,
dans lequel le message de réponse de négociation de paramètres proxy porte au moins l'une quelconque des informations suivantes :
une identité d'acceptation totale de paramètres spécifiques attendus de la découverte de service proxy, une identité de rejet total des paramètres spécifiques attendus de la découverte de service proxy, une identité d'acceptation partielle des paramètres spécifiques attendus de la découverte de service proxy et une liste de paramètres spécifiques acceptés de la découverte de service proxy.

7. Procédé selon la revendication 6, dans lequel le procédé comprend en outre :
lorsqu'au moins deux dispositifs proxy comprennent l'identité d'acceptation totale des paramètres spécifiques attendus de la découverte de service proxy dans un message de réponse de négociation de paramètres proxy renvoyé, le dispositif de demande proxy sélectionnant l'un des dispositifs en tant que le dispositif proxy.

8. Dispositif de réseau de rattachement, comprenant :
une première unité configurée pour : acquérir des informations associées de fonction de découverte de service proxy de dispositifs proxy ayant une fonction proxy dans un réseau de rattachement ;
une deuxième unité configurée pour : négocier des paramètres spécifiques de découverte de service proxy avec les dispositifs proxy ;
une troisième unité configurée pour : déterminer des opérations de découverte de service du présent dispositif de demande proxy effectuées par le dispositif proxy pour le compte du présent dispositif de demande proxy, et maintenir un échange d'informations avec les dispositifs proxy ;
**caractérisé en ce que** le deuxième dispositif est configuré de telle sorte que : le processus de négociation des paramètres spécifiques de la découverte de service proxy avec les dispositifs proxy est le suivant :
la deuxième unité envoyant un message de demande de négociation de paramètres proxy aux dispositifs proxy, dans lequel le message de demande de négociation de paramètres proxy porte des paramètres spécifiques de la découverte de service proxy attendus par le présent dispositif de demande proxy, et recevant un message de réponse de négociation de paramètres proxy renvoyé par le dispositif proxy ;
dans lequel les paramètres spécifiques de la découverte de service proxy attendus par le présent dispositif de demande proxy comprennent un ou plusieurs de :
un intervalle de temps d'écoute du dispositif de demande proxy, des conditions de services qui peuvent être fournis dans un type de service devant être annoncées par le proxy, des identités de types de services intéressés fournies par d'autres dispositifs de réseau de rattachement, des conditions ou des contenus de services intéressés qui peuvent être fournis dans des types de services fournis par d'autres dispositifs de réseau de rattachement.

9. Dispositif selon la revendication 8, dans lequel la première unité est configurée de telle sorte que le processus d'acquisition des informations associées de découverte de services des dispositifs proxy est le suivant :
la première unité recevant des messages de découverte de service portant une fonction de découverte de service proxy de dispositif envoyée depuis d'autres dispositifs de réseau de rattachement, dans lequel le message de découverte de service est l'un d'une trame de balise de découverte de service, d'une trame de balise de synchronisation et d'autres messages de découverte de service ; ou
la première unité envoyant un message de demande proxy à d'autres dispositifs de réseau de rattachement, recevant des messages de réponse de demande proxy renvoyés par les autres dispositifs de réseau de rattachement, et acquérant des informations associées de fonction de découverte de service proxy de dispositif à partir des messages de réponse de demande proxy.

10. Dispositif selon la revendication 8, dans lequel
le message de réponse de négociation de paramètres proxy comprend au moins l'une quelconque des informations suivantes :
une identité d'acceptation totale de paramètres spécifiques attendus de la découverte de service proxy, une identité de rejet total des paramètres spécifiques attendus de la découverte de service proxy, une identité d'acceptation partielle des paramètres spécifiques attendus de la découverte de service proxy et une liste de paramètres spécifiques acceptés de la découverte de service proxy.

11. Dispositif selon la revendication 8, dans lequel
la troisième unité est configurée pour : lorsqu'au moins deux dispositifs proxy comprennent l'identité d'acceptation totale des paramètres spécifiques attendus de la découverte de service proxy dans des messages de réponse de négociation de paramètres proxy renvoyés, sélectionner l'un des dispositifs en tant que le dispositif proxy.

12. Dispositif de réseau de rattachement avec une fonction proxy, comprenant :
une première unité configurée pour envoyer des informations associées de fonction de découverte de service proxy d'un présent dispositif à un dispositif de demande proxy ayant des demandes proxy ;
une deuxième unité configurée pour négocier des paramètres spécifiques de découverte de service proxy avec le dispositif de demande proxy ;
une troisième unité configurée pour, après la réception d'une notification de décision d'un proxy, effectuer des opérations de découverte de service du dispositif de demande proxy pour le compte du dispositif de demande proxy, et maintenir un échange d'informations avec le dispositif proxy ;
**caractérisé en ce que** le deuxième dispositif est configuré de telle sorte que : le processus de négociation des paramètres spécifiques de la découverte de service proxy avec le dispositif de demande proxy est le suivant :
la deuxième unité recevant un message de demande de négociation de paramètres proxy envoyé par le dispositif de demande proxy, dans lequel le message de demande de négociation de paramètres proxy porte des paramètres spécifiques de la découverte de service proxy attendus par le dispositif de demande proxy, et renvoyant un message de réponse de négociation de paramètres proxy au dispositif proxy ;
dans lequel les paramètres spécifiques de la découverte de service proxy attendus par le dispositif de demande proxy comprennent un ou plusieurs de :
un intervalle de temps d'écoute du dispositif de demande proxy, des conditions de services qui peuvent être fournis dans un type de service devant être annoncées par le proxy, des identités de types de services intéressés fournies par d'autres dispositifs de réseau de rattachement, des conditions ou des contenus de services intéressés qui peuvent être fournis dans des types de services fournis par d'autres dispositifs de réseau de rattachement.

13. Dispositif selon la revendication 12, dans lequel la troisième unité est configurée de telle sorte que l'exécution des opérations de découverte de service du dispositif de demande proxy pour le compte du dispositif de demande proxy comprend au moins une ou plusieurs des opérations suivantes :
l'annonce d'une adresse MAC du dispositif de demande proxy ;
l'annonce de l'identité de type de service que le dispositif de demande proxy demande à un proxy d'annoncer ;
l'annonce de conditions ou de contenus de services qui peuvent être fournis dans le type de service que le dispositif de demande proxy demande au proxy d'annoncer ;
si le dispositif proxy reçoit des messages de réponse pour le type de service annoncé en provenance d'autres dispositifs de réseau de rattachement, le dispositif proxy notifiant les messages de réponse au dispositif de demande proxy ;
si le dispositif proxy reçoit l'identité de type de service par lequel le dispositif de demande proxy est intéressé, ou le dispositif proxy reçoit des conditions ou des contenus de services qui peuvent être fournis dans le type de service par lequel le dispositif de demande proxy est intéressé, le dispositif proxy notifiant les informations reçues au dispositif de demande proxy ;
le troisième dispositif est configuré pour maintenir l'échange d'informations avec le dispositif de demande proxy selon les manières suivantes :
le dispositif de demande proxy effectuant une opération d'écoute périodique ;
si le dispositif proxy a des informations à notifier au dispositif de demande proxy, le dispositif proxy envoyant les informations au dispositif de demande proxy au cours de la période de temps d'écoute périodique ;
si le dispositif de demande proxy n'a pas besoin d'un proxy, le dispositif de demande proxy envoyant un message de sortie de mode proxy au dispositif proxy, et le dispositif proxy arrêtant toutes les opérations proxy pour le dispositif de demande proxy après la réception du message ;
si le dispositif proxy ne peut pas continuer les opérations proxy, le dispositif proxy envoyant le message de sortie de mode proxy au dispositif de demande proxy au cours de la période de temps d'écoute périodique, et le dispositif de demande proxy sortant du mode proxy après la réception du message.

14. Dispositif selon la revendication 13, dans lequel la troisième unité est configurée pour maintenir en outre l'échange d'informations avec le dispositif de demande proxy selon les manières suivantes :
le dispositif de demande proxy envoyant au moins un message au dispositif proxy au cours d'un temps convenu ;
si le dispositif proxy ne reçoit pas de message en provenance du dispositif de demande proxy au cours du temps convenu, le dispositif proxy envoyant le message de sortie de mode proxy au dispositif de demande proxy et arrêtant toutes les opérations proxy pour le dispositif de demande proxy.

15. Dispositif selon l'une quelconque des revendications 12 à 14, dans lequel la première unité est configurée de telle sorte que le processus d'envoi des informations associées de la fonction de découverte de service proxy du présent dispositif au dispositif de demande proxy ayant des demandes proxy est le suivant :
la première unité envoyant activement un message de découverte de service portant une fonction de découverte de service proxy de dispositif au dispositif de demande proxy, dans lequel le message de découverte de service est l'un d'une trame de balise de découverte de service, d'une trame de balise de synchronisation et d'autres messages de découverte de service ; ou
la première unité recevant un message de demande proxy envoyé depuis le dispositif de demande proxy, et renvoyant un message de réponse de demande proxy, dans lequel le message de réponse de demande proxy comprend des informations associées de la fonction de découverte de service proxy de dispositif ; ou
dans lequel le message de réponse de négociation de paramètres proxy comprend au moins l'une quelconque des informations suivantes
une identité d'acceptation totale de paramètres spécifiques attendus de la découverte de service proxy, une identité de rejet total des paramètres spécifiques attendus de la découverte de service proxy, une identité d'acceptation partielle des paramètres spécifiques attendus de la découverte de service proxy et une liste de paramètres spécifiques acceptés de la découverte de service proxy.
